# EUROPEAN PATENT APPLICATION

(11) **EP 4 523 990 A1**
(43) Date of publication of application: **19.03.2025**
(21) Application number: 23197990.7
(22) Date of filing: 18.09.2023
(51) Int. Cl.: B60W 60/00

(54) **REDUNDANT ARCHITECTURE FOR AUTOMATED OR AUTONOMOUS DRIVING**

(71) Applicant: aiMotive Kft., 1025 Budapest (HU)
(72) Inventor: DÓCZI, Gergo, 1039 Budapest (HU); HOLMAN, Krisztián, 1148 Budapest (HU); KISS, Dávid, 1031 Budapest (HU); KOVÁCS, Péter Tamás, 1022 Budapest (HU); MÓRÓ, Milán János, 2461 Tárnok (HU); PONGRÁCZ, Gábor, 1028 Budapest (HU); RIBLI, Dezso Kornél, 1122 Budapest (HU); RUDAN, János, 2092 Budakeszi (HU); SURÁNYI, Márton, 2360 Gyál (HU); SZARVAS, Dénes, 2030 Érd (HU); TALABÉR, Gábor László, 2119 Pécel (HU); VAJNA, Szabolcs, 1163 Budapest (HU)
(74) Representative: Valvoda, Jakob

(57) **Abstract**

A method for determining trajectories for vehicles includes accessing a plurality of sensors (106) of a vehicle to define a plurality of environmental models, including a primary environmental model (112) and a plurality of secondary environmental models (114), wherein the primary environmental model uses sensor data of the plurality of sensors, and each secondary environmental model uses sensor data of a subset of the plurality of sensors, computing a primary trajectory (116) for the vehicle using the primary environmental model, and validating (120) the primary trajectory against each one of the plurality of secondary environmental models. Furthermore, a corresponding device and vehicle are defined.

## Description

### TECHNICAL FIELD

The disclosure relates to determining trajectories for automated, autonomous, or semi-autonomous vehicles using a redundant architecture. The disclosure may refer to a method for determining trajectories for vehicles, to a respective device and a vehicle capable of automatically determining trajectories.

### BACKGROUND

The advancement in technology have enabled a rapid evolution of autonomous or automated vehicles. Autonomous or automated vehicles have a high potential to transform transportation in terms of safety and efficiency. They may also reduce energy consumption. Autonomous or automated vehicles are vehicles that navigate and operate without or with reduced human interaction. This is achieved by using in-built sensors, which are supplied to computer vision and machine learning components that generate control signals for the autonomous or automated vehicle.

The degree of automation for autonomous or automated vehicles is defined by the SAE (Society of Automotive Engineers) J3016 standard, which describes levels of automation, classifying vehicles based on their capabilities, ranging from Level 0 (no automation) to Level 5 (full automation). On Level 0, a human driver is responsible for all aspects of driving, including control and monitoring of the environment. Partial automation starts at Level 2. The driver must remain engaged with the driving task and monitor the environment. However, several automated functions may work together to control operation of the vehicle. Accordingly, an autonomous or automated vehicle could also be referred to as a semi-automated vehicle. Full automation at Level 5 involves complete autonomy across all driving scenarios and conditions.

One of the key challenges that autonomous or automated vehicles face at Level 2 and above is the accurate and reliable determination of vehicle trajectories. The trajectory of a vehicle is the path it follows. The ability to plan and adjust the vehicle trajectories plays a significant role in ensuring safe and efficient operation of the vehicle. The trajectory determination process must be accurate enough to navigate complex traffic situations and adaptable enough to react to dynamic changes in the environment, such as changing road conditions, traffic signals, or moving objects in the environment.

Existing solutions for trajectory determination rely on environmental information. It may be challenging to reach a desired level of reliability and robustness, especially in complex and dynamic environments. Moreover, it may be challenging to provide results in a fast manner to address dynamic changes in the environment. Errors in trajectories can have severe consequences, including accidents and traffic disruptions. Therefore, there is a need for an efficient architecture that offers a high degree of reliability and robustness.

Safety of autonomous driving is addressed by various standards, including the ISO 26262 standard and SOTIF (Safety of the Intended Functionality), which is an ISO/PAS 21448 standard. SOTIF addresses the safety of autonomous driving functions under non-fault conditions. ISO 26262 focuses on safety under fault conditions.

Redundancy is a concept widely used in various fields of technology to improve reliability and robustness of systems. A redundant system usually involves the use of additional or duplicate components that can perform the same task if primary components fail.

Approaches to redundancy in trajectory determination for autonomous vehicles have been discussed. For example, US 2019/0079513 A1 refers to a fault-tolerant control of an autonomous vehicle that uses two control lanes. Data representing a motion plan of the autonomous vehicle and a dynamic state of the autonomous vehicle are received through the control lanes and used to implement a motion plan for the autonomous vehicle. The multiple control lanes include a first control lane and a second control lane. The first control lane implements the motion plan. If faults associated with the implementation of the motion plan are detected, motion of the autonomous vehicle is adjusted based on fault reaction parameters.

A dual-path system is disclosed in US 2021/0122384 A1. Hardware redundancy is reached by calculating control information in separated units. Based on surrounding information, a driving assistance device calculates a control amount of a downstream apparatus of the vehicle. The downstream apparatus calculates the control amount of the driving assistance device based on the surrounding information. A steering diagnostic unit in the downstream apparatus judges that the same control amount of the driving assistance device at predetermined time is normal, and different control amount of the driving assistance device is abnormal. However, safety solutions relying on hardware redundancy do not fulfill SOTIF architectural targets for vehicles on Level 2 and above.

US 2022/0055651 A1 refers to computation of multiple trajectories. A set of candidate trajectories is generated. Scores are computed based on parameter values associated with corresponding final trajectories. The computed scores are used to determine a trajectory, which is used as a warm-start trajectory for trajectory optimization. The warm-start trajectory is applied to develop a final trajectory for the vehicle.

Known approaches reveal drawbacks in efficiency, reliability, and robustness for trajectory planning for autonomous vehicles. This may particularly apply with regard to SOTIF requirements for vehicles on Level 2 and above. Hence, there is a need in the art to enable efficient trajectory determination with an increased level of reliability and robustness.

### SUMMARY OF THE INVENTION

The object of the present disclosure is solved by a method for determining trajectories for vehicles, a device, and a vehicle according to the independent claims. The disclosure may also define one or more computer-readable media. Preferred embodiments are defined in the dependent claims.

A first aspect of the disclosure provides a method for determining trajectories for vehicles, comprising accessing a plurality of sensors of a vehicle to define a plurality of environmental models, including a primary environmental model and a plurality of secondary environmental models, wherein the primary environmental model uses sensor data of the plurality of sensors, and each secondary environmental model uses sensor data of a subset of the plurality of sensors, computing a primary trajectory for the vehicle using the primary environmental model, and validating the primary trajectory against at least one of the plurality of secondary environmental models.

The method may be a computer-implemented method. The method may be implemented on an electronic device, including one or more processors or processing units (PUs) that may be coupled to each other and that may be configured to perform individual method steps. The one or more processors or PUs may implement hardware and/or software modules that execute the individual method steps. Examples may include an accessing PU or access interface, a computing PU or processor, and/or a validating PU or validator that may perform one or more steps of the method according to the first aspect or implementations of the first aspect.

The plurality of environmental models is defined based on available sensors of the vehicle. An environmental model for the vehicle may involve using a variety of sensors to perceive the surrounding environment, interpret it, and/or construct a dynamic, detailed representation of the environment that the vehicle can use to navigate safely and efficiently within the environment. This process may involve gathering of (raw or pre-processed) sensor data using the available set of sensors (or a subset thereof). Since each sensor type may have its strengths and weaknesses with regard to environmental conditions or constraints, sensor fusion could be used to combine data from multiple sensors and create a more complete, reliable, and accurate picture of the environment for the vehicle. Defining the environment may further include identification and classification of objects in the environment, such as distinguishing between one or more of other vehicles, pedestrians, cyclists, road signs, obstacles, and others, to name a few. This may involve an application of trained machine learning models. Identified objects may be tracked by the vehicle to determine their positions, velocities, or trajectories over time. With one or more of the collected and processed data, the environmental model may be constructed. The environmental model may represent static elements like surface structure, roads, lanes, or various static objects, as well as dynamic elements like other vehicles, pedestrians, cyclists, or various moving objects. The environmental model may also include a current state of the vehicle. The environmental model is preferably dynamic. The environmental model may be continually updated based on latest sensor data and detected changes in the environment.

The plurality of environmental models includes a primary environmental model and at least one secondary environmental model. The primary environmental model may use all available sensors and respective sensor data of the vehicle. Each secondary environmental model may use a subset of the available sensors. The subsets for individual secondary environmental models may differ. However, the subsets may also be the same for at least some of the secondary environmental models. Given the variations and uncertainties in sensor data, multiple environmental models may each represent a different interpretation of the sensor data or a different prediction of future states, which can be used to evaluate or validate planned trajectories to ensure robustness against uncertainties.

The primary environmental model is used to compute a primary trajectory for the vehicle. To do this, the primary environmental model may be used, for example, by a planning and control system of the vehicle to determine the primary trajectory. The generation process may take into account the current state of the vehicle, including one or more of the vehicle's location, speed, direction, and other vehicle parameters, in any combination. The generation process may further take into account other factors, including one or more of a target state of the vehicle, destination or intermediate waypoints, and/or constraints like minimum speed, maximum speed, maximum acceleration, surface conditions, and/or steering angles, to name a few, in any combination.

Typically, trajectories are validated against the environmental model used to compute the trajectory. According to the disclosure, the primary trajectory is validated against at least one, at least some, or each one of the plurality of secondary environmental models. Validation may include, for example, one or more of collision checking, feasibility checking, efficiency, and/or safety considerations, in any combination. For example, the primary trajectory may be checked for potential collisions with objects in a respective secondary environmental model. This might involve simulating the vehicle's motion along the primary trajectory and checking if it intersects with the paths of other objects predicted in the respective secondary environmental model. The validation may further involve ensuring that the vehicle can physically follow the primary trajectory given its dynamics and constraints. For instance, a trajectory that would require the vehicle to make a turn sharper than it's capable of, or accelerate/decelerate beyond its capabilities, would be deemed infeasible. Further validations may include efficiency and safety considerations. The primary trajectory may be evaluated based on one or more of travel time, energy efficiency, ride comfort, such as avoiding sharp turns, strong acceleration/breaking, abrupt stops/starts, adherence to traffic rules, risk assessments, fallback strategies, safe buffer zones, and the like, in any combination.

The method enables an efficient trajectory determination, which is based on a primary environmental model that uses all available sensor data of the vehicle. The secondary environmental models can be efficiently defined without requiring a large amount of additional hardware or processing resources. Since the plurality of secondary environmental models relies on different sensor data (or varying environmental building approaches), the secondary environmental models can highlight strengths of individual sensors or sensor combinations, which may, for example, depend on weather or light conditions. Moreover, different environmental building approaches and algorithms could be used to accentuate, for example, different fusion techniques or data processing algorithms applied during environmental model building. Validating the primary trajectory that has been generated using the primary environmental model against the at least one of the secondary environmental models, ensures that the primary trajectory has an increased level of reliability and robustness if it passes the validation.

Preferably, the method further comprises using the primary trajectory or rejecting the primary trajectory based on said validating of the primary trajectory against at least one of the plurality of secondary environmental models. The primary trajectory can be rejected if at least one of the secondary environmental models indicates a critical condition caused by the primary trajectory. The primary trajectory can be rejected if several or at least the plurality of the secondary environmental models votes against the primary trajectory. Likewise, the primary trajectory can pass the validation and be used to control the vehicle if at least the majority of the secondary environmental models confirms and/or votes for the primary trajectory.

In a further implementation of the method according to the first aspect, the method further comprises computing at least one secondary trajectory for the vehicle using at least one of the plurality of secondary environmental models. Preferably, the method further comprises validating the at least one secondary trajectory using the plurality of environmental models. The at least one secondary trajectory may be validated against the primary environmental model. Additionally or as an alternative, the at least one secondary trajectory may be validated against at least one of the secondary environmental models.

The at least one secondary trajectory may be computed in parallel to the primary trajectory. Thus, together with (or substantially during a same time range for) computing the primary trajectory, one or more secondary trajectories may be calculated using one or more secondary environmental models. This may be advantageous since if the primary trajectory is rejected, a selection of secondary trajectories is already available and can be directly validated using the plurality of environmental models. This reduces the time-to-decision.

In a further implementation of the method according to the first aspect, the at least one secondary trajectory is computed only if the primary trajectory is rejected. Accordingly, the at least one secondary trajectory may be computed subsequently to the primary trajectory. The at least one secondary trajectory or a plurality of secondary trajectories may be calculated using the plurality of secondary environmental models, wherein each secondary trajectory is computed using a different secondary environmental model. The at least one secondary trajectory or a plurality of secondary trajectories may also be calculated using those secondary environmental models that voted against the primary trajectory. Additionally or as an alternative, the secondary environmental models may have a hierarchical order or may be ranked. For example, secondary environmental models relying on sensors providing data with a lower resolution or less reliable sensor data can have a lower ranking. In contrast, secondary environmental models relying on hi-res sensors or sensors providing more reliable sensor data can have a higher ranking. One or more secondary environmental models having the highest ranking or being higher in hierarchical order can be used for computing one or more secondary trajectories, respectively. The approaches can be combined. Hence, a plurality of secondary trajectories can be computed based on a secondary environmental model that voted against the primary trajectory, and base on one or more further secondary environmental models having high rankings. Computing the primary trajectory and subsequently computing the secondary trajectories enables an implementation on devices with limited processing resources. A determination can also be made in a dynamic manner depending on available processing resources of a vehicle. This enables efficient calculation on devices with limited processing resources.

In a further implementation of the method according to the first aspect, the method further comprises selecting a trajectory from the primary trajectory and the at least one secondary trajectory based on said validating of the primary trajectory and the at least one secondary trajectory against the plurality of environmental models. The validation may include a ranking of the trajectories, including the primary trajectory and/or the at least one secondary trajectory, which ranking may be determined based on various validation parameters, such as collision checking, feasibility checking, efficiency and safety considerations, or respective tests, to name a few, in any combination, and the trajectory can be ranked according to results of the respective tests or checks. A trajectory having the highest rank can be selected as a target trajectory for the vehicle.

In a further implementation of the method according to the first aspect, said validating the primary trajectory and/or the at least one secondary trajectory includes voting by one or more of the plurality of environmental models for the primary trajectory and the at least one secondary trajectory. In one embodiment, said validating the primary trajectory may include voting by at least one secondary environmental model of the plurality of environmental models for the primary trajectory. In one embodiment, said validating the at least one secondary trajectory may include voting by the involved (primary or secondary) environmental models of the plurality of environmental models for the at least one secondary trajectory. Preferably, the primary environmental model can be used during validation based on one or more technical factors, such as processing resources. The voting may be a majority vote. In case the voting mechanism is not based on an odd number of decisions (or environmental models), a draw may be resolved by establishing a hierarchical ranking of the environmental models, wherein votes may be weighted according to hierarchy or ranking of the respective environmental model.

In a preferred implementation of the method according to the first aspect, if the majority of environmental models vote against the primary trajectory, said selecting includes selecting a trajectory from the at least one secondary trajectory having a majority of votes. The majority can also be determined based on weighted votes. If the primary trajectory is rejected, the secondary trajectory having the most (weighted) votes may be selected as the target trajectory. The validation can be run in parallel if sufficient processing resources are available. This ensures a fast decision making process.

In a further implementation of the method according to the first aspect, said voting results in a "safe" or "not safe" vote for each trajectory. This may include the primary trajectory or one or more secondary trajectories. One or more trajectories can be assessed as "safe" by an environmental model. The voting mechanism can indicate which is the trajectory that is considered safe by the majority of the environmental models. This trajectory can be selected as the target trajectory to control the vehicle.

Preferably, the plurality of environmental models used for voting, such as the plurality of secondary environmental models, may include an odd number of environmental models. This may simplify the voting process, avoid draws, and ensure majorities.

In a further implementation of the method according to the first aspect, said selecting the trajectory includes a matrix lookup. Similar solutions are also envisaged by the present disclosure. Matrix lookup represents a highly efficient, yet simple selection strategy. The votes for each trajectory may be compiled into a matrix. The matrix can be organized such that each row may represent a trajectory, including the primary and secondary trajectories, and each column may represent a vote from an environmental model. The row and column association may be also interchanged in one embodiment. Thus, each cell of the matrix may represent a vote for a particular trajectory originating from a particular environmental model. The trajectory may be selected using the matrix. This could be as simple as choosing the trajectory with the highest total votes. Alternatively, embodiments might use more complex decision rules. For example, embodiments can prioritize the environmental models that may pay attention to specific factors, such as safety over comfort, or it might require a minimum number of safety votes for a trajectory to be considered.

In a further implementation of the method according to the first aspect, validating the trajectories against the plurality of environmental models includes validating the trajectories in terms of safety goals. The validation in terms of safety goals may include considerations directed at one or more of collisions, safety distance, traffic rules, physical conditions of the vehicle, including stability and limits, environmental (or road) conditions, or emergency situations, and the like, in any combination. For example, trajectories can be validated by checking if they would lead, in the respective environmental model, to a collision with any other users or objects in the environment, including other vehicles, pedestrians, and obstacles. Further, a trajectory should ensure that the vehicle maintains a safe distance from other road users and objects. This safe distance can vary based on speed, size, and/or behavior of the objects, as well as the current surface, road, or weather conditions. Trajectories should also preferably adhere to all applicable traffic rules, including speed limits, stop signs, traffic lights, and more. Trajectories could be validated with respect to physical factors of the vehicle. In particular, trajectories should be preferably within stability and maneuverability limits, such that trajectories that would require excessive acceleration, deceleration, or sharp turns that the vehicle might not be able to handle safely are avoided. Further, it may be necessary to adjust speed and following distance based on road conditions like wet or icy roads, which could be considered during trajectory validation. It is to be understood that these are examples of safety goals and that an embodiment may take any of these goals, factors, parameters or considerations into account, in any combination, to address particular safety requirements and/or available processing resources and efficiency constraints.

In a further implementation of the method according to the first aspect, the method further comprises validating the primary trajectory against the primary environmental model. A validation against the environmental model that has been used to calculate the trajectory itself represents a dual check to determine possible computation errors, which increase the safety level of the computation. It is to be understood that the secondary trajectories may be validated against the respective secondary environmental model that computed the secondary trajectory.

In a further implementation of the method according to the first aspect, the plurality of secondary environmental models is independent from each other. The independence of models can be a statistical independence, which can be based on processed sensor data and processing approaches. This can be achieved, for example, by differences in the used sensor data and/or different algorithms, such as fusion and interpretation of the data within the environmental models.

Preferably, each subset of sensors used to define the respective secondary environmental model may include at least one different sensor of the plurality of sensors. This can lead to independence of the secondary environmental models. As an alternative, at least two secondary environmental models can rely on subsets having the same sensors. However, the at least two secondary environmental models can apply conceptually independent environmental model building methodologies. Using the same set of sensors can lead to independent environmental models if the concept of building the environmental models is different and independent. For example, making an early fusion and processing the result may lead to a different (and independent) environmental model than making training and applying a late fusion of sensor images in another environmental model. The present disclosure is not limited by a particular notion of independence as long as the environmental models reveal a different (and independent) behavior regarding trajectory computation and validation.

In a further implementation of the method according to the first aspect, the method further comprises calculating an actuation sequence for the vehicle based on a trajectory, such as the selected trajectory, which may also be referred to as the final or target trajectory. The actuation sequence for the vehicle may determine how the vehicle will physically move to follow the selected trajectory. This process may involve translating the selected trajectory into a sequence of low-level commands or actions that actuators of the vehicle, like one or more of steering wheel, throttle, and/or brake, can execute. If the selected trajectory is a continuous curve, it may be discretized or broken down into a sequence of control segments. Each control segment may represent a short distance that the vehicle is intended to travel in a short amount of time. The current state of the vehicle may be estimated using available sensor data and/or internal data from the vehicle. This may include operational states, such as a current position, orientation, speed, acceleration, and the like, in any combination. For each segment of the trajectory, a control point may be defined that the vehicle should reach. This control point may include a target position, target speed, or target orientation, and other parameters, in any combination. A control algorithm may calculate the actuation sequence that the actuators are intended to follow to move the vehicle from its current state to the target state. This may include a control of steering and/or speed of the vehicle. The calculated actuation sequence can then be sent to the respective actuators. For example, a steering command could be sent to the vehicle's steering system, and/or a throttle or brake command could be sent to the vehicle's engine control unit (ECU) or brakes.

In a further implementation of the method according to the first aspect, the method further comprises validating results of the actuation sequence with regard to convergence to the trajectory within a safe envelope. The validation can ensure that the vehicle is indeed following the selected or final trajectory within the predetermined safe envelope. This may involve continuously comparing the vehicle's actual position, orientation, speed, and/or other states and parameters, to name a few, in any combination, with expected values defined by the selected trajectory, for example, at the discretized control segments. Thereby, deviations from the trajectory could be detected to avoid problems with the vehicle's control system or with the trajectory itself.

Preferably, the safe envelope is defined by vehicle dynamics, environmental constraints, and one or more thresholds for uncertainties and errors. The safe envelope may be defined around (or within a distance of) the selected or final trajectory. The safe envelope represents a safe area in which the vehicle can deviate from the exact trajectory without causing a safety risk. The size and shape of the safe envelope might depend on various factors, including one or more of the vehicle's size and properties, current traffic and road conditions, and/or an expected behavior of other road users and moving objects, to name a few, in any combination. Deviations may be reflected in the one or more thresholds. If the vehicle is within the safe envelope, then the vehicle may be considered to be following the trajectory safely. If the vehicle is outside of the safe envelope or outside of a threshold distance, then a safety risk may be indicated, and corrective actions may be triggered. Further, a progress towards a target state of the selected or final trajectory may be checked. If the vehicle is converging towards the target state, then the vehicle may be considered to be on track to reach the trajectory. If the vehicle is diverging (within a threshold confidence interval as defined by the one or more thresholds) from the target state, then a problem with the control system or the trajectory itself might be indicated, and corrective actions might be triggered.

In a further implementation of the method according to the first aspect, the plurality of sensors includes one or more (optical) cameras, and/or one or more radars, and/or one or more LiDARs, and/or one or more thermal sensors or cameras. The (optical) cameras may include a range of low to medium to high angular resolution, stereo camera pairs, fisheye cameras, narrow-angle and wide-angle cameras, and others, in any combination. LiDAR sensors may include low to medium to high angular resolution with distance measurement. Radar sensors may include low to medium to high angular resolution with direct distance and velocity measurement. It is to be understood that the present disclosure is not limited to a set or type of sensors. Rather, any type of sensor capable to assist in semi-autonomous, autonomous or automated driving can be used in the set of sensors.

In a further implementation of the method according to the first aspect, the method further comprises combining the sensor data with map data and/or egomotion data of the vehicle or of one of the plurality of sensors. This enables comprehensive and accurate environmental models. The combination allows for an improved and more robust understanding of the vehicle's environment and its state in those surroundings. The map data may be obtained from a pre-loaded map or a real-time mapping service and may provide for detailed information about the road network. The map data is used to provide an understanding of the overall structure of the environment. The egomotion data reflects the movement of the sensors and/or the vehicle itself. This can include motion-based parameters and states of the sensors or vehicle, which can be obtained from the sensors and systems within the vehicle. Combining these different types of data enables the vehicle to understand its environment in a more complete and accurate sense. For example, various sensor data might indicate that another vehicle is ahead of the vehicle, map data could show that the vehicle is approaching a narrowing of a road, and egomotion data of the vehicle can indicate that the vehicle is keeping its velocity. By combining this information, the vehicle can infer that the vehicle is approaching a potentially dangerous or hazardous area with existing traffic ahead, which may require immediate breaking or reduction of speed, and the vehicle can plan its actions accordingly.

A second aspect of the invention refers to a computer-readable storage medium storing program code, the program code comprising instructions that when executed by a processor carry out the method of the first aspect or one of the implementations of the first aspect. Preferably, the computer-readable storage medium stores program code with instructions that, when executed, configure a processor to determine trajectories for vehicles, comprising accessing a plurality of sensors of a vehicle to define a plurality of environmental models, including a primary environmental model and a plurality of secondary environmental models, wherein the primary environmental model uses sensor data of the plurality of sensors, and each secondary environmental model uses sensor data of a subset of the plurality of sensors, computing a primary trajectory for the vehicle using the primary environmental model, and validating the primary trajectory against at least one of the plurality of secondary environmental models.

A third aspect of the invention refers to a device, comprising at least one processing component, configured to perform the method according to the first aspect or one of the implementations of the first aspect. Preferably, the device is configured to determine trajectories for vehicles, comprising accessing a plurality of sensors of a vehicle to define a plurality of environmental models, including a primary environmental model and a plurality of secondary environmental models, wherein the primary environmental model uses sensor data of the plurality of sensors, and each secondary environmental model uses sensor data of a subset of the plurality of sensors, computing a primary trajectory for the vehicle using the primary environmental model, and validating the primary trajectory against at least one of the plurality of secondary environmental models.

In an implementation of the device according to the third aspect, the device comprises one or more of a trajectory planner configured to compute the primary trajectory and/or the at least one secondary trajectory for the vehicle; a trajectory validator configured to validate the primary trajectory and/or the at least one secondary trajectory against the plurality of environmental models; and a trajectory selector configured to select the trajectory from the primary trajectory and the at least one secondary trajectory based on said validating of the primary trajectory and the at least one secondary trajectory against the plurality of environmental models.

A fourth aspect of the invention refers to a vehicle, comprising a plurality of sensors and a device according to the third aspect or one of the implementations of the third aspect. Preferably, the device is configured to determine trajectories for the vehicle, comprising accessing the plurality of sensors of the vehicle to define a plurality of environmental models, including a primary environmental model and a plurality of secondary environmental models, wherein the primary environmental model uses sensor data of the plurality of sensors, and each secondary environmental model uses sensor data of a subset of the plurality of sensors, computing a primary trajectory for the vehicle using the primary environmental model, and validating the primary trajectory against at least one of the plurality of secondary environmental models.

In an implementation of the vehicle according to the fourth aspect, the vehicle is an automated vehicle or an autonomous vehicle or a semi-autonomous vehicle.

It is to be understood that embodiments according to the third or fourth aspect may configure a logic, processor, or functional unit according to features of an embodiment of the first aspect of the disclosure or any implementations of the first aspect, in any combination. Preferably, the device and the vehicle may be configured according to embodiments of the first aspect, in any combination. Likewise, the method according to embodiments of the first aspect may include processing steps reflecting structural features of the device or the vehicle, in any combination.

According to further aspects and embodiments, a system and a software architectural setup for determining trajectories for vehicles is defined. The system and the software architectural setup can be configured to perform a method or implement a device according to aspects, implementations, and embodiments according to the first, second, third and fourth aspect, in any combination.

### BRIEF DESCRIPTION OF THE DRAWINGS

To illustrate the technical features of embodiments of the present invention, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- Figure 1: is a flowchart of a method according to an embodiment of the present disclosure,
- Figure 2: is a flowchart of a method in accordance with a further embodiment of the present disclosure,
- Figure 3: is a flowchart of a method in accordance with an embodiment of the present disclosure, and
- Figure 4: is a schematic diagram of a vehicle with processing components according to an embodiment of the present disclosure.

### DETAILED DESCRIPTION OF EMBODIMENTS

In the following description, reference is made to drawings which show by way of illustration various embodiments. Also, various embodiments will be described below by referring to several examples. It is to be understood that the embodiments may include changes in design and structure without departing from the scope of the claimed subject matter.

The techniques described herein may be implemented in various computing systems, examples of which are described in greater detail below. Such systems generally involve the use of suitably-configured computing devices implementing a number of modules, each providing one or more operations needed to complete execution of such techniques. Each module may be implemented in its own way; all need not be implemented the same way. As used herein, a module may be a structural component of a system which performs an operational role, which may be a portion of or an entire software element (e.g., a function of a process, a discrete process, or any other suitable embodiment). A module may comprise computer-executable instructions and may be encoded on a computer storage medium. Modules may be executed in parallel or serially, as appropriate, and may pass information between one another using a shared memory on the computer on which they are executing, using a message passing protocol or in any other suitable way. Exemplary modules are described below carrying out one or more tasks, though it should be appreciated that the modules and division of tasks described may be merely illustrative of the type of modules that may implement the exemplary techniques described herein, and that the invention is not limited to being implemented in any specific number, division, or type of modules. In some implementations, all functionalities may be implemented in a single module. Further, the modules are discussed below as all executing on a single computing device for clarity, though it should be appreciated that, in some implementations, the modules may be implemented on separate computing devices adapted to communicate with one another. In particular, the modules may be implemented on a device for processing simulated sensor data, on a host system or in a simulated test environment according to one or more embodiments of the present disclosure, in any combination.

The present disclosure may use various abbreviations. For example, ODD may be used to refer to Operational Design Domain. MRM may be used to refer to Minimum Risk Maneuver. ASIL may be used to refer to Automotive Safety Integrity Level. SOTIF may be used as an abbreviation for the title of ISO 21448 standard, namely: Safety Of The Intended Functionality. ECU may be used to refer to Electronic Control Unit. SW may be used to refer to Software. LiDAR may be used to refer to Light Detection And Ranging. HD may be used to refer to High Definition, which may be used in conjunction with maps, for example. Other abbreviations readily known to the skilled person can be used throughout the disclosure.

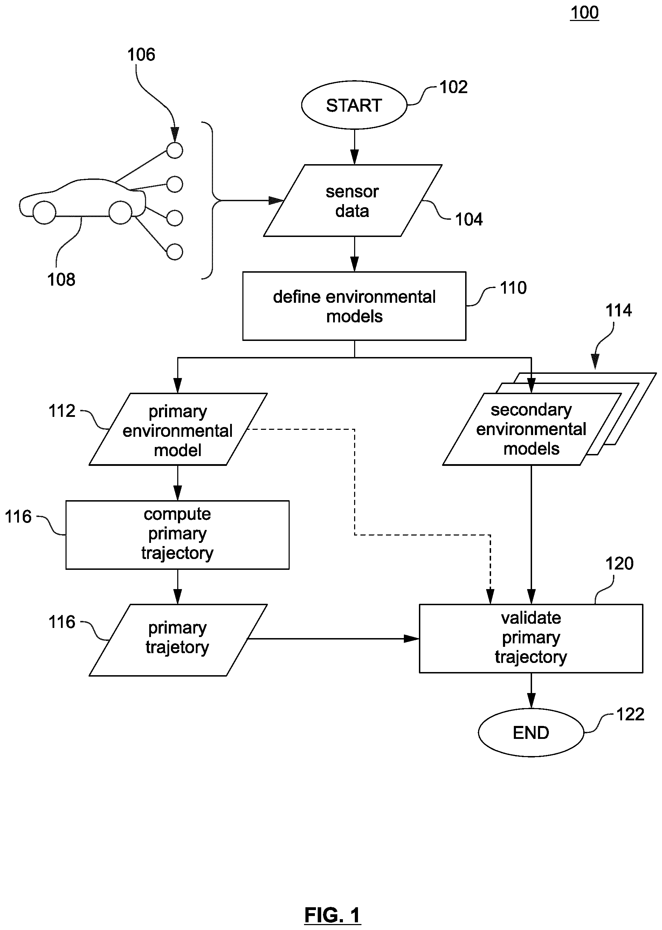

Figure 1 is a flowchart of a method according to an embodiment of the present disclosure. The method 100 may be a method for determining trajectories for vehicles. The method 100 may start in item 102. Sensor data 104 may be retrieved from a plurality of sensors 106 of a vehicle 108.

The sensor data 104 may be used to define 110 a plurality of environmental models for the vehicle 108, including a primary environmental model 112 and a plurality of secondary environmental models 114. The primary environmental model 112 uses (and is defined by) sensor data of the plurality of sensors 106. The secondary environmental models 114 use sensor data of subsets of the plurality of sensors 106.

The plurality of environmental models, including the primary environmental model 112 and the plurality of secondary environmental models 114 may be independent from each other. As such, while the primary environmental model may use the sensor data from all available sensors 106, each subset used to define the data basis for the secondary environmental models 114 may include at least one different sensor of the plurality of sensors. However, the used sensors may also be the same in at least two secondary environmental models 114. In this case, the independence of the at least two secondary environmental models 114 can be achieved by applying conceptually independent environmental model building methodologies to build each of the at least two secondary environmental models 114.

In item 116, a primary trajectory 118 is computed using the primary environmental model 112. The primary environmental model 112 is an all-in model, which combines all sensor data. The primary trajectory 118 generated using the primary environmental model 112 is validated against at least one of the plurality of secondary environmental models 114 in item 120. As indicated by the dashed line, as an option, the primary trajectory 118 may also be validated against the primary environmental model 112 to verify the computation in item 116. The method 100 may end in item 122.

Even though the secondary environmental models 114 may not work on all available sensor data of the vehicle 108, they may have advantages in or be specialized for certain conditions. Thus, validating the primary trajectory 118 determined using the all-in (primary) environmental model 112 against at least one secondary environmental model 114 may provide for increased safety, robustness and validity of the determined primary trajectory 118, before the primary trajectory 118 is used to control the vehicle 108.

For example, various types of sensors may have different capabilities and a different focus with respect to environmental conditions. Therefore, the secondary environmental models 114 may underline the capabilities and the focus of the used type of sensors to better reflect and accentuate the respective environmental conditions.

As an example, optical cameras may have a highest angular resolution or information density, but no direct distance measurement. Camera sensor data may be affected by low light or low visibility conditions. LiDARs may have a medium angular resolution or information density. The LiDAR typically has direct distance measurement and is not affected by lighting conditions, but affected by rain, snow, fog, and other conditions. Radars may have a lowest angular resolution or information density, but can have direct distance and velocity measurement. Still, radar sensors typically do not provide for lane information. Radar sensors are not affected by lighting conditions, rain, snow, fog, and other conditions. Further sensors, like thermal cameras, acoustic sensors or alike may also be used in any combination and are encompassed by the present disclosure.

Regarding a potential number of sensors in one or more examples of the present disclosure, preferably a plurality of cameras can be used. The plurality of cameras may include diverse types of cameras, such as stereo camera pairs, fisheye cameras, narrow-angle and wide-angle cameras, and the like, in any combination. Even though, typically one LiDAR is frequently used in various application areas, a plurality of LiDAR sensors can be implemented. Further, one or more radars could be used. For example, long-range and short-range radars (or any other types) can be implemented in the vehicle 108.

The disclosure proposes an approach for trajectory determination and planning, including a method, device, vehicle, system and software architectural setup, which may be applied in automated / autonomous driving. Embodiments retains the capability of driving based on the richest and most performant combination of sensors 106 of the vehicle 108 in the primary environmental model 112, while not compromising on overall system safety, robustness, and availability requirements in the presence of adverse environmental conditions or system errors.

This is achieved by utilizing the best-in-class or all-in primary environmental model 112, which allows for the best possible perception performance due to the full utilization of different sensor modalities and information sources of the plurality of sensors 106. The validation 120 is based on independent secondary environmental models 114, which do not restrict the performance of the best-in-class (primary) environmental model 112, while at the same time not putting prohibitive safety integrity levels and statistical validation requirements on the primary environmental model 112. The validation 120 avoids ambiguity in decision making based on trajectory checking against the environmental models 112, 114 for ensuring safety. This may rely on majority decisions that are made during the validation 120.

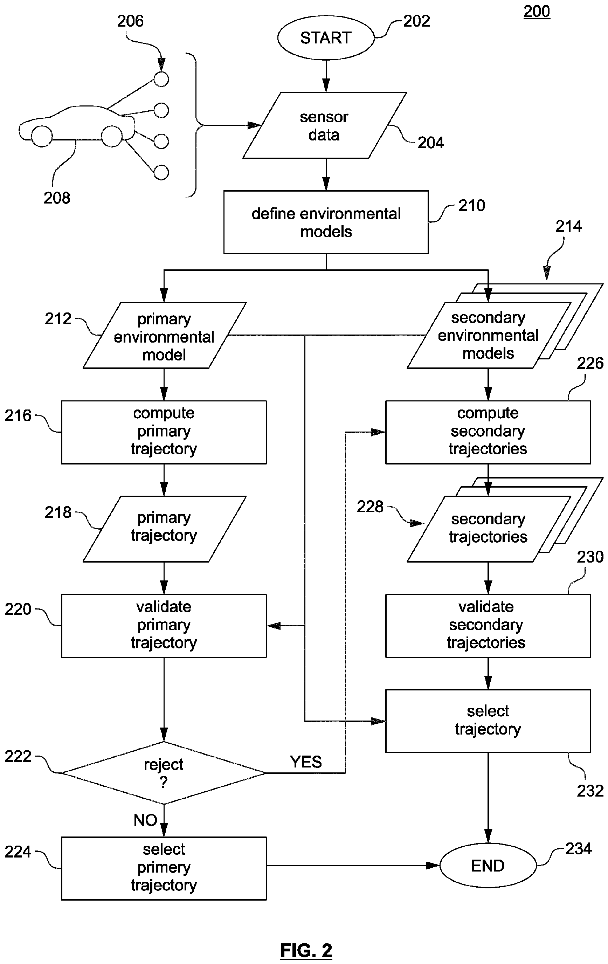

Figure 2 is a flowchart of a method in accordance with a further embodiment of the present disclosure. At least parts of the method 200 may correspond to processing in method 100 of Figure 1.

The method 200 may be a method for determining trajectories for vehicles and may start in item 202. Sensor data 204 may be retrieved from a plurality of sensors 206 of a vehicle 208.

The sensor data 204 may be used to define 210 a plurality of environmental models for the vehicle 208, including a primary environmental model 212 and a plurality of secondary environmental models 214. The primary environmental model 212 uses (and is defined by) sensor data of the plurality of sensors 206. The secondary environmental models 214 use sensor data of subsets of the plurality of sensors 206.

In item 216, a primary trajectory 218 is computed using the primary environmental model 212. The primary trajectory 218 is validated against at least one of the plurality of secondary environmental models 214 in item 220. Additionally, the primary trajectory 218 may be validated against the primary environmental model 212 in item 220. The available environmental models may vote on the primary trajectory 218, rate the primary trajectory 218, or use any other suitable technique for validating the primary trajectory 218 with respect to various parameters and conditions, such as collision checking, feasibility, efficiency, or safety considerations, in any combination, in item 220.

Results of the validating 220 are used to either approve or reject the primary trajectory 218 in item 222. If the primary trajectory 218 is approved, method 200 may continue with item 224, where the primary trajectory 218 is selected. The selected trajectory may be used to control the vehicle 208. Based on new sensor data, the method 200 may iterate with determination of a next trajectory.

If the primary trajectory 218 is rejected, method 200 may continue with item 226, where at least one secondary trajectory 228 for the vehicle 208 may be computed using at least one of the plurality of secondary environmental models 214. Each secondary environmental model may be used to compute a secondary environmental trajectory, respectively.

The at least one secondary trajectory 228 may be validated in item 230 against one or more of the plurality of environmental models, including the primary environmental model 212 and the plurality of secondary environmental models 214. This may exclude or include the secondary environmental model that has been used to compute the respective secondary trajectory that is being validated in item 230. The validation in item 230 may be similar to the validation of the primary trajectory 218 in item 220.

Based on validation results of item 230, such as voting or ranking the at least one secondary trajectory 228, one of the at least one secondary trajectory 228 may be selected in item 232. The selected trajectory may be used to control the vehicle 208. If new sensor data is available, the method 200 may iterate with determination of a next trajectory. The method 200 may end in item 234.

Method 200 initially computes the primary trajectory 218 by using the primary environmental model 212. If the primary trajectory 218 is rejected in item 222, the secondary trajectories 228 can be computed in item 226. This may include the secondary trajectories 228 of all secondary environmental models 214, or secondary trajectories 228 resulting from a selection of one or more secondary environmental models 214, such as those that may be higher in a hierarchical order of the secondary environmental models 214. Additionally or as an alternative, only those secondary trajectories 228 that are using the secondary environmental models that voted against the primary trajectory 218 in items 220 and 222 could be used to compute the secondary trajectories 228 in item 226. Computing the secondary trajectories 228 after computing and validating the primary trajectory 218 may require less computing resources at the same time. Thus, the approach could be implemented on device with limited or restricted resources.

Regarding correspondences of method 200 with method 100, the sensor data 204 can at least partially correspond to sensor data 104; the sensors 206 may at least partially correspond to sensors 106; the vehicle 208 may at least partially correspond to vehicle 108; the primary environmental model 212 may at last partially correspond to the primary environmental model 112; the plurality of secondary environmental models 214 may at least partially correspond to the plurality of secondary environmental models 114; and/or the primary trajectory 218 may at least partially correspond to the primary trajectory 118, in any combination. Furthermore, processing in item 210 may at least partially correspond to item 110; processing in item 216 may at least partially correspond to item 116; and/or processing in item 220 may at least partially correspond to item 120, in any combination. Accordingly, features disclosed with regard to the method 100 can be at least partially used and implemented as corresponding features in method 200, and vice versa.

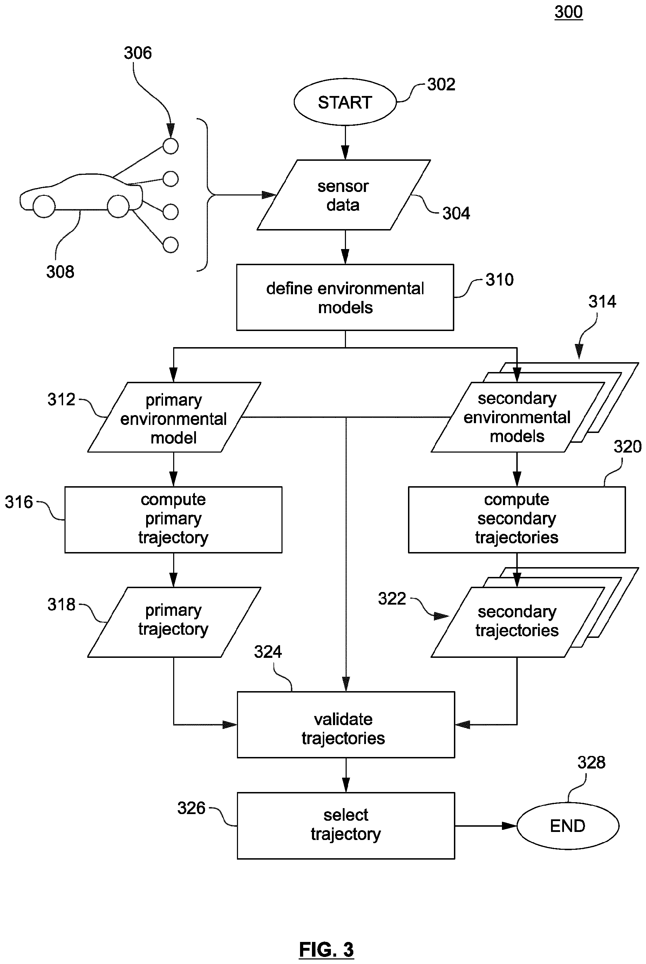

Figure 3 is a flowchart of a method in accordance with an embodiment of the present disclosure. At least parts of the method 300 may correspond to processing in method 100 of Figure 1 and/or method 200 of Figure 2.

The method 300 may be a method for determining trajectories for vehicles. The method 300 may start in item 302. Sensor data 304 may be retrieved from a plurality of sensors 306 of a vehicle 308.

The sensor data 304 may be used to define 310 a plurality of environmental models for the vehicle 308, including a primary environmental model 312 and a plurality of secondary environmental models 314. The primary environmental model 312 uses (and is defined by) sensor data of the plurality of sensors 306. The secondary environmental models 314 use sensor data of subsets of the plurality of sensors 306.

In item 316, a primary trajectory 318 is computed using the primary environmental model 312. In item 320, a plurality of secondary trajectories 322 is computed using the plurality of secondary environmental model 314. The primary trajectory 318 and the plurality of secondary trajectories 322 may be computed, at least partially, in parallel. However, the primary trajectory 318 and the plurality of secondary trajectories 322 may also be computed in a serial or sequential manner.

The trajectories, including the primary trajectory 318 and the plurality of secondary trajectories 322 are validated against one or more of the primary environmental model 312 and/or the plurality of secondary environmental models 314 in item 324. The validation of the primary trajectory 318 and of the plurality of secondary trajectories 322 may be performed in parallel. As an alternative, the validation of the primary trajectory 318 and of the plurality of secondary trajectories 322 may be performed in a serial or sequential manner.

As such, if the primary trajectory 318 is computed first and validated in item 324 as a first trajectory, and if the secondary trajectories 322 are computed and validated subsequently, the processing in method 300 may at least partially correspond to the sequential processing of method 200 in Figure 2.

Using the validation results of item 324, a trajectory may be selected in item 326. The validation results may include votes of the environmental models involved in the validation in item 324. For example, if the majority of environmental models vote against the primary trajectory 318, a secondary trajectory from the plurality of secondary trajectories 322 having a majority of votes can be selected.

Votes may also be weighted or prioritized based on the used primary or secondary environmental models. The primary environmental model may have a high ranking. The secondary environmental models may be prioritized according to the sensor data or sensor types used to build the environmental model. The priorities may also include environmental conditions or parameters of the vehicle 308.

In one example, types of sensors may be prioritized as follows. For example, for daytime and/or clear conditions, a camera may have a higher priority to LiDAR, which may have a higher priority than a radar. For nighttime, a LiDAR may have a higher priority than a camera, which may have a higher priority than a radar. For adverse weather conditions, a radar may have a higher priority than a camera, which may have a higher priority than a LiDAR. These conditions reflect exemplary conditions for selected lists of sensors. In embodiments, the priorization may take into account different conditions and other types of sensors, in any combination.

The selected trajectory may be used to control the vehicle 308. This may involve calculating an actuation sequence for the vehicle 308, and submitting the actuation sequence to actuators of the vehicle 308. For example, a steering command of the actuation sequence could be sent to the steering system, and a throttle or brake command could be sent to the engine control unit (ECU). The resulting state of the vehicle 308 could be continuously monitored and evaluated, with regard to a safe envelope. This may involve accessing further sensor data. Hence, the method 308 may continue with accessing the sensor data, updating and adjusting the environmental models 312, 314, and computing next trajectories 318, 322. The method 300 may end in item 328.

Regarding correspondences of method 300 with methods 100 or 200, the sensor data 304 can at least partially correspond to sensor data 104 or 204; the sensors 306 may at least partially correspond to sensors 106 or 206; the vehicle 308 may at least partially correspond to vehicle 108 or 208; the primary environmental model 312 may at last partially correspond to the primary environmental model 112 or 212; the plurality of secondary environmental models 314 may at least partially correspond to the plurality of secondary environmental models 114 or 214; the primary trajectory 318 may at least partially correspond to the primary trajectory 118 or 218; and the secondary trajectories 322 may at least partially correspond to the secondary trajectories 228, in any combination. Furthermore, processing in item 310 may at least partially correspond to item 110 or 210; processing in item 316 may at least partially correspond to item 116 or 216; processing in item 320 may at least partially correspond to item 226; item 324 may at least partially correspond to items 220 and 230, or 120; or item 326 may at least partially correspond to items 232 and/or 224, in any combination. Accordingly, features disclosed with regard to the method 100 or 200 can be at least partially used and implemented as corresponding features in method 300, and vice versa.

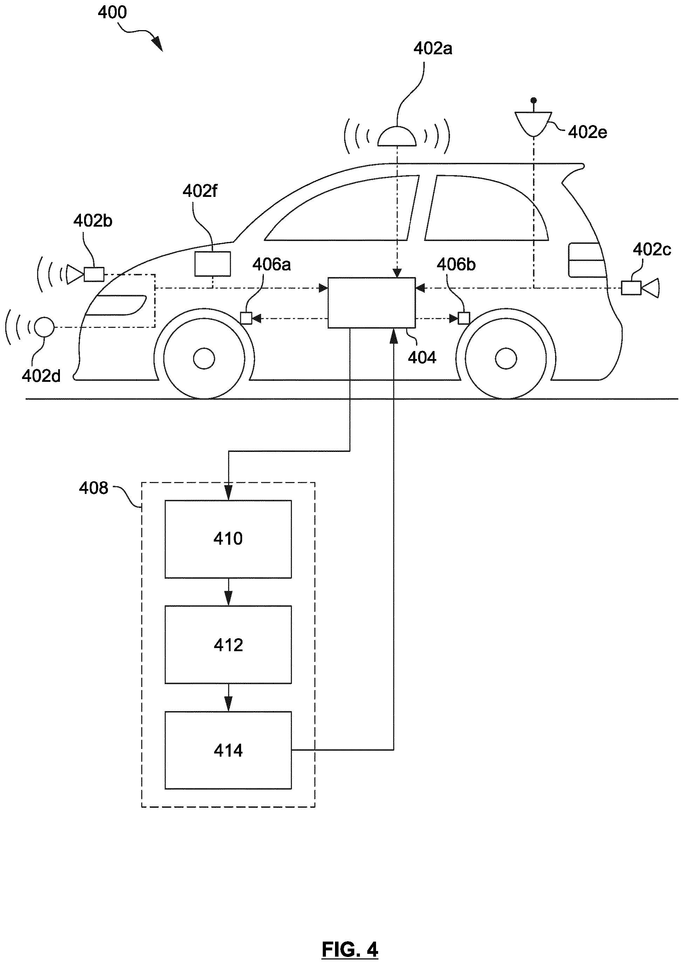

Figure 4 is a schematic diagram of a vehicle with processing components according to an embodiment of the present disclosure. The vehicle 400 can be an automated vehicle or an autonomous vehicle or a semi-autonomous vehicle. Even though Figure 4 resembles a car, it is to be understood that the present disclosure is not limited to passenger vehicles or land vehicles. Rather, any other type of a vehicle is encompassed by the present disclosure, including land vehicles, such as passenger vehicles, trucks, two-wheelers, bicycles, public transportation vehicles, rail-based vehicles, and other type of vehicles on land. Vehicles may further include water vehicles, air vehicles, or space vehicles, and any other type of vehicle, which may be operated in an automated, autonomous, or a semi-autonomous manner that may require determination of trajectories to control the vehicle.

As one example, Figure 4 shows a silhouette of a car, displayed from side perspective. The vehicle 400 may include a plurality of sensors 402 of various types. As an example, the sensors 402 may include one or more LiDARs 402a, which may be located on the vehicle 400 or on multiple sides and locations of the vehicle 400 and may emit and receive laser beams to map the environment; one or more cameras 402b, 402c, preferably located around the vehicle, such as in the front, rear, corners and sides, which may capture visual data from the environment; and/or one or more radars 402d, which may be preferably located at the front, rear, corners and possibly sides of the vehicle 400, and which may emit radio waves to detect distances and relative speeds of objects. Further sensors 402 may include ultrasonic sensors (not shown), which can be located in bumpers or lower parts of the vehicle 400, which can be used for close-proximity detection, GPS or other satellite-based positioning sensors 402e, which may allow the vehicle 400 to determine its global position. The vehicle 400 may further include an IMU (Inertial Measurement Unit) 402f, which may be configured to measure acceleration and angular velocity of the vehicle 400 to determine relative changes in position and orientation.

It is to be understood that Figure 4 shows an exemplifying selection of sensors 402 of different example types at different exemplifying positions and locations of the vehicle 400. The disclosure may encompass less or more sensors, different sensor types, and different locations on and in the vehicle 400, in any number and combination.

Data from the sensors 402 may be fed into a processing unit 404. This may be done using one or more wired or wireless data bus systems of the vehicle 400. The processing unit 404 may process the information and control actuators 406 of the vehicle 400. Actuators 406 may include at least one of a steering actuator 406a, which may control a direction of the vehicle 400, a throttle actuator controlling acceleration and speed, a brake actuator 406b controlling the braking mechanism, and other types of actuators for individual components of the vehicle 400, in any number and combination. Similar to the sensors 402, the actuators 406, their number, type and position are depicted as an example in Figure 4. The disclosure may encompass less or more actuators, different actuator types, and different locations on and in the vehicle 400, in any number and combination.

The processing unit 404 may include one or more dedicated units, components or modules, which may be configured to perform specific tasks, and which can be implemented in hardware, in software, or as a combination of hardware and software. For example, the processing unit 404 may include a trajectory determination component 408 that may be configured to determine trajectories for the vehicle 400 based on current sensor data from sensors 402. The trajectory determination component 408 may be configured to receive sensor data from plurality of sensors 402 of the vehicle 400 to define a plurality of environmental models, including a primary environmental model and a plurality of secondary environmental models. The primary environmental model may use sensor data of all of the plurality of sensors 402. In contrast, the secondary environmental models may rely on sensor data from a subset of the plurality of sensors 402. The trajectory determination component 408 may be configured to compute a primary trajectory for the vehicle 400 using the primary environmental model, and to validate the primary trajectory against at least one of the plurality of secondary environmental models.

For individual tasks, the trajectory determination component 408 may include a trajectory planner 410, a trajectory validator 412, and a trajectory selector 414. The trajectory planner 410 can be configured to compute the primary trajectory and/or the at least one secondary trajectory for the vehicle 400. The trajectory validator 412 can be configured to validate the primary trajectory and/or the at least one secondary trajectory against the plurality of environmental models. The trajectory selector 414 can be configured to select the trajectory from the primary trajectory and the at least one secondary trajectory based on said validating of the primary trajectory and the at least one secondary trajectory against the plurality of environmental models. It is to be understood that other units or modules of the trajectory determination component 408 can be used to perform the tasks as disclosed in embodiments of the present disclosure.

If the validation is successful, the trajectory determination component 408 may calculate an actuation sequence to control the vehicle 400 according to the selected trajectory. If the primary trajectory is rejected, the trajectory determination component 408 may be configured to determine further trajectories, such as secondary trajectories that are computed using the secondary environmental models. The trajectory determination component 408 can be configured, for example, to perform one or more steps of method 100 of Figure 1, of method 200 of Figure 2, or of method 300 of Figure 3, in any combination.

Embodiments of the disclosure use a (primary) environmental model that uses a full combination of available sensor information and sensor data. This reflects the most performant fusion capability to create the primary environmental model around the vehicle 400. The primary environmental model may be referred to as an "all-in" environmental model. Since the primary environmental model uses all available sensor data and information, there may be no requirements on a proof of independence or high safety integrity ratings of the primary environmental model.

One or more alternative (secondary) environmental models can be defined, each using a subset of the available sensors 402. Using different sensors in different secondary environmental models ensures straightforward proof of independence between each of the models, which may be referred to as "independent" environmental models. For example, in an architecture using camera 402b, 402c, LiDAR 402a, and radar 402d sensors, at least three secondary environmental models could be defined, namely camera-only, LiDAR-only, and radar-only secondary environmental models in an example architecture. It is to be understood that three secondary environmental models are used a viable example only and any other numbers of secondary environmental models can be used, such as at least four, five, six or any higher number of secondary environmental models. Selecting an odd number of secondary environmental models may be an advantageous solution to avoid a draw during voting. However, embodiments of the present disclosure can also use an even number of secondary environmental models and resolve draws appropriately, for example, by using ranking.

The trajectory planner 410 may be used to compute target vehicle trajectories for all environmental models. The trajectory validator 412 may be capable of validating the output of the trajectory planner 410 against one or more (or all) environmental models. This may include a validation with respect to critical safety goals, such as collision with an obstacle, leaving a driveable road surface, and the like, in any combination. This may require a medium safety integrity requirement (ASII, B or C).

The trajectory selector 414 may be capable of selecting a best trajectory in terms of performance and safety based on the validation results from the trajectory validator 412. This may require a high safety integrity requirement (ASII, D).

Furthermore, a controller of the processing unit 404 could be used to calculate the desired actuation sequence based on the selected trajectory. This may require a medium safety integrity requirement (ASIL B). A control checker may validate that the actuation sequence from the controller results in a convergence to the trajectory selected by the trajectory selector 414 within a safe envelope.

Embodiments of the present disclosure enable automated driving based on a best possible environmental model under all conditions, which is the primary environmental model, since it uses all possible sensor inputs for environmental reconstruction. This may involve, in one example, a combination of cameras, radars, LiDARs, HD-map or egomotion, to name a few, in any combination. Since sensor modalities as a single source of information will have systematic weaknesses under certain conditions, the primary environmental model is expected to yield the best trajectory with the highest availability under nominal conditions of the vehicle system. Nevertheless, the system architecture according to the present disclosure provides for the capability to detect errors in the primary environmental model. Further the system architecture has the capability to remain in operation for an MRM in the light of partial sensor or system failures.

To achieve this, embodiments of the present disclosure use the "independent" secondary environmental models for supervision of the "all-in" primary environmental model, and/or for provision of a seamless failover capability in case of detected errors in the primary environmental model. Ambiguity of the supervisory task is reduced by performing trajectory validation against the plurality of environmental models, for example, in terms of predefined safety goals. For example, validating a trajectory against an environmental model for obstacle collision or leaving of the desired drivable areas can always be evaluated in an objective way, yielding a clear "safe" or "not safe" vote of the trajectory validator.

Embodiments of the present disclosure keep the complexity and compute requirements of modules, such as high safety integrity SW modules, to a minimum. The trajectory selection process of the validated trajectories needs to be as simple as possible. For this reason, the trajectory validator 412 provides an easily interpretable output to the trajectory selector 414. The trajectory selector 414 can be realized as a matrix lookup, with, for example, a 2-out-of-3 voting system if three environmental models are used, and/or a possibility of incorporating dynamic priority rules for the secondary environmental models. This may be based on ODD conditions and the knowledge of systemic weaknesses of specific secondary environmental models.

In case the trajectory validator 412 and/or the trajectory selector 414 votes against the primary trajectory generated by the "all-in" primary environmental model, if there are three secondary environmental models, the two secondary environmental models which voted "against" the primary trajectory may be used or may have the precedence in performing an MRM trajectory planning. The MRM trajectory planning may be performed by a high integrity feedback loop, reconfiguring the trajectory planner 410 using the respective secondary environmental model for MRM planning. In this way, specific modules may not be needed for MRM planning. Rather, the modules considered error-free can be reused for commanding the MRM maneuver.

The selected trajectory, including the primary trajectory, one of the secondary trajectories, or a MRM trajectory, may be considered valid and used to actuate the vehicle 400. This may involve a closed-loop controller. Embodiments of the present disclosure implement a design principle of decomposing the task into a complex, but low safety integrity part and a simpler, high safety part. In order to achieve a desired integrity level of the controller output, a traditional doer-checker mechanism may be deployed. The doer-checker mechanism involves an entity (the "doer") to perform a task, and a second entity (the "checker") to independently verify that the task was done correctly. This enhances reliability. Accordingly, output of the controller may be monitored for convergence to the selected trajectory. Further verification may control whether the actuator sequence results in a state of the vehicle 400 that stays inside a safe envelope around the selected trajectory.

In a preferred embodiment, the disclosure may encompass a processing device with a plurality of means that may be configured to perform functionality of embodiments of the present invention. In particular, the device may be configured for determining trajectories for vehicles and may comprise means for accessing a plurality of sensors of a vehicle to define a plurality of environmental models, including a primary environmental model and a plurality of secondary environmental models, wherein the primary environmental model uses sensor data of the plurality of sensors, and each secondary environmental model uses sensor data of a subset of the plurality of sensors; means for computing a primary trajectory for the vehicle using the primary environmental model; and means for validating the primary trajectory against each one of the plurality of secondary environmental models. Preferred embodiments of the device may include further means for implementing details of the first aspect and implementations thereof, and further embodiments as disclosed with regard to Figures 1 to 4 and corresponding description, in any combination.

It is to be understood that the implementational details as provided in Figures 1 to 4 represent preferred examples. Other implementations using different components, modules, blocks, units, circuitry, connections, and links can be used, and the present disclosure is not restricted by a particular implementation in silicon.

While some embodiments have been described in detail, it is to be understood that aspects of the disclosure can take many forms. In particular, the claimed subject matter may be practiced or implemented differently from the examples described, and the described features and characteristics may be practiced or implemented in any combination. The embodiments shown herein are intended to illustrate rather than to limit the invention as defined by the claims.

## Claims

1. A method for determining trajectories for vehicles, comprising:
accessing a plurality of sensors of a vehicle to define a plurality of environmental models, including a primary environmental model and a plurality of secondary environmental models, wherein the primary environmental model uses sensor data of the plurality of sensors, and each secondary environmental model uses sensor data of a subset of the plurality of sensors;
computing a primary trajectory for the vehicle using the primary environmental model; and
validating the primary trajectory against at least one of the plurality of secondary environmental models.

2. The method of claim 1, further comprising using the primary trajectory or rejecting the primary trajectory based on said validating of the primary trajectory against at least one of the plurality of secondary environmental models.

3. The method of claim 1 or 2, further comprising computing at least one secondary trajectory for the vehicle using at least one of the plurality of secondary environmental models.

4. The method according to claim 3, wherein the at least one secondary trajectory is computed in parallel to the primary trajectory.

5. The method according to claim 3, wherein the at least one secondary trajectory is computed only if the primary trajectory is rejected.

6. The method according to any one of claims 3 to 5, further comprising selecting a trajectory from the primary trajectory and the at least one secondary trajectory based on said validating of the primary trajectory and the at least one secondary trajectory against the plurality of environmental models.

7. The method according to any one of the preceding claims, preferably claim 4, wherein said validating the primary trajectory and/or the at least one secondary trajectory includes voting by the plurality of environmental models for the primary trajectory or the at least one secondary trajectory.

8. The method according to claim 7, wherein if the majority of environmental models vote against the primary trajectory, said selecting includes selecting a trajectory from the at least one secondary trajectory having a majority of votes.

9. The method according to claim 7 or 8, wherein said voting results in a "safe" or "not safe" vote for each trajectory.

10. The method according to any one of the claims 6 to 9, wherein said selecting the trajectory includes a matrix lookup.

11. The method according to any one of the preceding claims, wherein validating the trajectories against the plurality of environmental models includes validating the trajectories in terms of safety goals.

12. The method according to any one of the preceding claims, further comprising validating the primary trajectory against the primary environmental model.

13. The method according to any one of the preceding claims, wherein the plurality of secondary environmental models are independent from each other.

14. The method according to any one of the preceding claims, wherein each subset includes at least one different sensor of the plurality of sensors.

15. The method according to any one of the preceding claims, preferably claim 6, further comprising calculating an actuation sequence for the vehicle based on the selected trajectory.

16. The method according to claim 15, further comprising validating results of the actuation sequence with regard to convergence to the selected trajectory within a safe envelope.

17. The method according to claim 16, wherein the safe envelope is defined by vehicle dynamics, environmental constraints, and one or more thresholds for uncertainties and errors.

18. The method according to any one of the preceding claims, wherein the plurality of sensors include one or more cameras, and/or one or more radars, and/or one or more LiDARs, and/or one or more thermal cameras.

19. The method according to any one of the preceding claims, further comprising combining the sensor data with map data and/or egomotion data of the vehicle or of one of the plurality of sensors.

20. At least one computer-readable medium storing instructions thereon that, when executed by a computing device, configure the computing device to perform a method according to any one of the preceding claims.

21. A device, comprising:
at least one processing component, configured to perform the method according to any one of the claims 1 to 19.

22. The device of claim 21, further comprising one or more of
a trajectory planner configured to compute the primary trajectory and/or the at least one secondary trajectory for the vehicle;
a trajectory validator configured to validate the primary trajectory and/or the at least one secondary trajectory against the plurality of environmental models; and
a trajectory selector configured to select the trajectory from the primary trajectory and the at least one secondary trajectory based on said validating of the primary trajectory and the at least one secondary trajectory against the plurality of environmental models.

23. A vehicle, comprising a plurality of sensors and the device according to any one of the claims 21 and 22.

24. The vehicle of claim 23, wherein the vehicle is an automated vehicle or an autonomous vehicle or a semi-autonomous vehicle.
